(19) Europäisches Patentamt
European Patent Office
Office européen des brevets

(11) EP 0 509 864 B1

(12) # FASCICULE DE BREVET EUROPEEN

(45) Date de publication et mention de la délivrance du brevet:
**25.06.1997 Bulletin 1997/26**

(21) Numéro de dépôt: **92400865.9**

(22) Date de dépôt: **27.03.1992**

(51) Int Cl.[6]: **C08K 13/00**
// C08L27/04,(C08K13/00, 3:26, 3:32),
(C08K13/00, 3:26, 5:57)

(54) **Compositions stabilisées de polymère halogéné contenant un composé du plomb ou un organo-étain**

Stabilisierte Zusammensetzungen halogenierter Polymere, welche eine Blei- oder Organozinnverbindung enthalten

Stabilized compositions of halogenated polymers containing a compound of lead or organo tin

(84) Etats contractants désignés:
**AT BE CH DE DK ES FR GB GR IT LI LU NL PT SE**

(30) Priorité: **09.04.1991 FR 9104547**

(43) Date de publication de la demande:
**21.10.1992 Bulletin 1992/43**

(73) Titulaire: **RHONE-POULENC CHIMIE**
**92408 Courbevoie Cédex (FR)**

(72) Inventeurs:
- **Arfiche, Mireille**
**F-77400 Lagny (FR)**
- **Pena Porta, Pierre**
**F-13320 Bouc Bel Air (FR)**
- **Carette, Louis**
**F-92130 Issy les Moulineaux (FR)**
- **Pouenat, François**
**F-75016 Paris (FR)**

(74) Mandataire: **Ricalens, François et al**
**RHONE-POULENC CHIMIE,**
**Direction de la Propriéte Industrielle,**
**25, quai Paul Doumer**
**92408 Courbevoie Cédex (FR)**

(56) Documents cités:
**EP-A- 0 256 872** **US-A- 2 597 987**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne de nouvelles compositions stabilisées à base de polymère halogéné et plus spécifiquement de polymère chloré.

Les polymères chlorés, et notamment le polychlorure de vinyle (PVC), ont tendance à se déshydrochlorer lors de leur mise en forme à chaud, pour libérer de l'acide chlorhydrique ; cela conduit à la formation de doubles liaisons polyéniques responsables de la coloration desdits polymères.

De nombreux additifs ont été préconisés, d'une part pour limiter la formation d'acide chlorhydrique ou pour le fixer, d'autre part pour ralentir la propagation des doubles liaisons polyéniques.

On peut se référer par exemple à l'ouvrage "La stabilisation des chlorures de polyvinyle" de F. CHEVASSUS (1957-éditions AMPHORA).

Parmi les composés connus depuis longtemps et encore très largement utilisés, on peut citer les composés du plomb et les composés organostanniques.

Les composés du plomb en raison de leur toxicité sont limités aux applications non-alimentaires des polymères chlorés, comme notamment les formulations pour profilés divers tels que tuyaux, profilés pour le bâtiment ou les formulations pour la protection des câbles électriques. Les composés organostanniques sont utilisés dans la plupart des applications des polymères chlorés, qu'elles soient alimentaires ou non-alimentaires.

Une stabilisation acceptable des polymères chlorés et plus particulièrement du PVC nécessite le plus souvent l'utilisation conjointe de plusieurs stabilisants qui agissent de manière complémentaire et parfois synergétique.

La présente invention concerne des compositions stabilisées à base de polymère chloré, caractérisées en ce qu'elles contiennent :

a) 0,005 à 5% en poids d'au moins un composé du plomb ou d'au moins un composé organostannique,
b) 0,005 à 5% en poids d'au moins un carbonate basique essentiellement amorphe d'aluminium et de magnésium, représenté globalement par la formule (I) :

$$(MgO)y, Al_2O_3, (CO_2)_x, (H_2O)_z \qquad (I)$$

dans laquelle :

- y représente en moles un nombre entier ou fractionnaire tel que $0 < y \leq 1,7$
- x représente en moles un nombre entier ou fractionnaire tel que $0 < x \leq 0,7$
- z représente en moles un nombre entier ou fractionnaire supérieur ou égal à 3, et dans laquelle au plus 1/4 de l'aluminium est sous forme non amorphe.

Les carbonates basiques essentiellement amorphes d'aluminium et de magnésium sont des composés non-cristallins, contrairement aux hydrotalcites de l'art antérieur, dont l'analyse de la structure unidimensionnelle est généralement interprétée comme une structure de couches monoatomiques de MgO de type brucite, alternant avec des couches monoatomiques d'aluminium portant des carbonates.

Selon les analyses par diffraction X, les carbonates basiques d'aluminium et de magnésium de l'invention sont constitués par de l'oxyde de magnésium, de l'hydroxyde de magnésium ou du carbonate de magnésium entouré de carbonate basique et/ou d'hydroxyde d'aluminium amorphe. C'est en ce sens que l'on parle de composés amorphes ou essentiellement amorphes dans le présent texte : l'oxyde de magnésium ou l'hydroxyde de magnésium possède une structure cristalline, mais l'ensemble du composé de formule (I) n'a pas une structure cristalline.

Les carbonates basiques amorphes d'aluminium et de magnésium de formule (I) peuvent être préparés par coprécipitation, dans les proportions requises, d'un carbonate basique d'aluminium (ou hydroxycarbonate d'aluminium) avec un dérivé du magnésium tel qu'un hydroxyde de magnésium ou un carbonate de magnésium.

Bien que cela ne soit pas nécessaire pour leur propriété de stabilisants, on peut ajouter aux coprécipités ainsi obtenus divers composés qui forment une sorte d'enrobage des particules du carbonate basique d'aluminium et de magnésium de formule (I).

Ainsi, par exemple, on peut ajouter de l'acide stéarique ou l'un de ses dérivés, notamment des stéarates métalliques, un polyol tel que le sorbitol.

Ces composés permettent d'améliorer la dispersion du carbonate basique d'aluminium et de magnésium dans le polymère chloré ou le cas échéant d'améliorer la stabilité dudit carbonate.

Le séchage du carbonate basique d'aluminium et de magnésium est conduit de manière à atteindre les spécifications souhaitées en matière de taux d'humidité.

Ainsi, dans la formule I, par amorphe il faut comprendre que au plus 1/4, avantageusement 1/10, plus préférentiellement 1/20, de préférence 1/100 de l'aluminium est sous forme non amorphe (i.e. sous la forme cristalline), de préférence l'espèce contenant le magnésium est cristalline.

Selon l'invention, pour éviter que les espèces aluminifères ne deviennent cristallines, il est avantageux d'ajouter des polyols, préférentiellement des polyols présentant 6 atomes de carbone, de préférence des sucres, parmi les sucres les préférés sont ceux de la famille du sorbitol.

La concentration en poids des polyols est dans la fourchette de 0,1 à 20%, de préférence entre 1 et 10 %, en général au moins 0.1/4.

Les compositions selon l'invention contiennent de 0,005 % à 5 % en poids de carbonate basique amorphe d'aluminium et de magnésium de formule (I) par rapport au poids de polymère chloré, et de préférence de 0,01 % à 2 % en poids. Les polymères chlorés sont notamment le polychlorure de vinyle (PVC), le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

De manière générale tout type de PVC convient, quel que soit son mode de préparation : polymérisation en masse, en suspension, en émulsion ou de tout autre type et quelle que soit sa viscosité intrinsèque.

Les homopolymères du chlorure de vinyle peuvent également être modifiés chimiquement, par exemple par chloration. De nombreux copolymères du chlorure de vinyle peuvent également être stabilisés contre les effets de la chaleur, c'est-à-dire le jaunissement et la dégradation. Ce sont en particulier les copolymères obtenus par copolymérisation du chlorure de vinyle avec d'autres monomères présentant une liaison éthylénique polymérisable, comme par exemple l'acétate de vinyle ou le chlorure de vinylidène ; les acides maléique ou fumarique ou leurs esters ; les oléfines telles que l'éthylène, le propylène, l'hexène ; les esters acryliques ou méthacryliques ; le styrène ; les éthers vinyliques tels que le vinyldodécyléther.

Habituellement ces copolymères contiennent au moins 50 % en poids de motifs chlorure de vinyle et de préférence au moins 80 % en poids de motifs chlorure de vinyle.

Les compositions selon l'invention peuvent également contenir des mélanges à base de polymère chloré contenant des quantités minoritaires d'autres polymères, comme les polyoléfines halogénées ou les copolymères acrylonitrile-butadiène-styrène.

Le PVC seul ou en mélange avec d'autres polymères est le polymère chloré le plus largement utilisé dans les compositions de l'invention.

Les composés du plomb sont souvent des composés minéraux, mais également des composés organiques.

Ils sont notamment décrits dans ENCYCLOPEDIA of PVC de Leonard I. NASS (1976) page 299-303.

Ce sont des composés très divers dont les plus couramment utilisés sont le carbonate dibasique de plomb, le sulfate tribasique de plomb, le sulfate tétrabasique de plomb, le phosphite dibasique de plomb, l'orthosilicate de plomb, le silicate basique de plomb, le coprécipitat de silicate et de sulfate de plomb, le chlorosilicate basique de plomb, le coprécipitat de gel de silice et d'orthosilicate de plomb, le phtalate dibasique de plomb, le stéarate de plomb, le stéarate dibasique de plomb, le fumarate tétrabasique de plomb, le maléate dibasique de plomb, l'éthyl-2 hexanoate de plomb, le laurate de plomb.

La quantité de composé du plomb dans les compositions de l'invention est de 0,005 % à 5 % en poids par rapport au poids du polymère chloré et de préférence de 0,05 % à 2 % en poids.

Les compositions de l'invention contenant un composé du plomb peuvent comporter également des composés organiques du cadmium et du baryum.

Les composés organiques du cadmium et du baryum sont plus particulièrement les carboxylates et les phénolates de cadmium et les carboxylates et les phénolates de baryum.

Les plus couramment utilisés sont par exemple les sels de cadmium ou de baryum des acides maléique, acétique, diacétique, propionique, hexanoïque, éthyl-2 hexanoïque, décanoïque, undécanoïque, laurique, myristique, palmitique, stéarique, oléïque, ricinoléïque, béhénique (docosanoïque), hydroxystéarique, hydroxyundécanoïque, benzoïque, phénylacétique, paratertiobutylbenzoïque et salicylique ; les phénolates de cadmium ou de baryum du phénol, du naphtol et des phénols substitués par un ou plusieurs radicaux alkyle, tels que les nonylphénols.

Pour des raisons pratiques ou pour des raisons économiques, on choisit de préférence parmi les composés organiques du baryum cités précédemment, le propionate de baryum, l'éthyl-2 hexanoate de baryum, le laurate de baryum, le stéarate de baryum, l'oléate de baryum, le ricinoléate de baryum, le docosanoate de baryum, le benzoate de baryum, le paratertiobutylbenzoate de baryum, le salicylate de baryum, le maléate de baryum et de mono(éthyl-2 hexyle), les nonylphénates de baryum, le naphténate de baryum et parmi les composés organiques du cadmium cités précédemment, le propionate de cadmium, l'éthyl-2 hexanoate de cadmium, le laurate de cadmium, le stéarate de cadmium, l'oléate de cadmium, le ricinoléate de cadmium, le docosanoate de cadmium, le benzoate de cadmium, le paratertiobutylbenzoate de cadmium, le salicylate de cadmium, le maléate de cadmium et de mono(éthyl-2 hexyle), les nonylphénates de cadmium, le naphténate de cadmium.

Avec les composés du baryum peuvent être utilisés également des composés organiques du calcium et du magnésium. Ces composés sont généralement choisis parmi les sels et phénolates indiqués précédemment pour le baryum.

Les composés organiques du cadmium représentent de 0 % à 1 % par rapport au poids du polymère chloré et de préférence de 0,01 % à 0,6 % tandis que les composés du baryum représentent de 0 % à 5 % en poids et de préférence de 0,02 % à 2 % en poids.

Les composés du calcium ou du magnésium représentent également de 0 % à 5 % en poids et de préférence de 0,02 % à 2 % en poids par rapport au poids de polymère chloré.

Les compositions peuvent contenir des composés organo-stanniques conjointement avec les carbonates basiques d'aluminium et de magnésium de formule (I).

Ces composés organo-stanniques sont notamment décrits dans PLASTICS ADDITIVES HANDBOOK de GACHTER/MULLER (1985) pages 204-210 ou dans ENCYCLOPEDIA OF PVC de Leonard I. NASS (1976) pages 313-325.

Ce sont plus particulièrement des carboxylates de dialkylétain et des mercaptides de dialkylétain.

Parmi ces composés les plus couramment utilisés sont les dérivés de di-n-butylétain ou de di-n-octylétain tels que par exemple le dilaurate de dibutylétain, le maléate de dibutylétain, le laurate-maléate de dibutylétain, le bis(maléate de mono-$C_4$-$C_8$-alkyle) de dibutylétain, le bis(lauryl-mercaptide) de dibutylétain, le bis-S-S'(mercaptoacétate d'isooctyle) dibutylétain, le β-mercapto propionate de dibutylétain, le maléate de di-n-octylétain polymère, le bis-S-S'(mercaptoacétate d'isooctyle) di-n-octylétain, le β-mercaptopropionate de di-n-octylétain.

Les composés organo-stanniques représentent de 0,005 % à 5 % en poids par rapport au poids du polymère chloré et de préférence de 0,01 % à 2 % en poids.

Les composés contenant un composé organo-stannique et un carbonate basique d'aluminium et de magnésium, contiennent fréquemment également un composé époxydé.

Le composé époxydé peut être notamment choisi parmi les polyglycérides époxydés comme l'huile de soja époxydée, l'huile de lin époxydée, les huiles de poisson époxydées et la talloil époxydée.

Habituellement les composés époxydés représentent de 0 % à 5 % en poids par rapport au poids du polymère chloré et plus spécifiquement de 0,1 % à 2 % en poids.

Les compositions de l'invention peuvent également comportées d'autres stabilisants secondaires organiques comme les huiles polyorganosiloxaniques γ-hydroxy-alkylées.

Les huiles polyorganosiloxaniques γ-hydroxy-alkylées, utilisés dans une quantité efficace, sont plus particulièrement celles qui répondent à la formule générale (II)

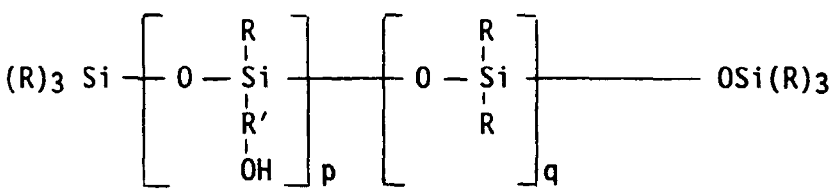

(II)

dans laquelle :

- les radicaux R, identiques ou différents, représentent un radical méthyle ou phényle, 60 % en moles au moins de radicaux R étant des radicaux méthyle,
- R' représente un radical alkylène, linéaire ou ramifié, ayant 2 à 6 atomes de carbone,
- p représente un nombre moyen de 1 à 30,
- q représente un nombre moyen de 1 à 100.

De préférence on utilise les huiles de formule (II) dans laquelle :

- R représente un radical méthyle ;
- R' représente un radical triméthylène ou méthyl-2 triméthylène ;
- p représente un nombre moyen de 2 à 20 ;
- q représente un nombre moyen de 2 à 30.

Généralement les huiles polyorganosiloxaniques γ-hydroxyalkylées représentent de 0 % à 5 % en poids par rapport au poids du polymère chloré et de préférence de 0,01 % à 2 % en poids.

La présence d'huiles polyorganosiloxaniques γ-hydroxyalkylées permet de diminuer de manière notable dans les compositions, la quantité de lubrifiants internes tels que l'huile de ricin hydrogénée, de lubrifiants mixtes tels que les

cires esters et de lubrifiants externes, tout en améliorant la résistance aux chocs du polymère.

Les compositions selon l'invention peuvent comporter également des adjuvants habituels tels que d'autres stabilisants thermiques, des antioxydants phénoliques, des agents anti-UV tels que les benzophénones, les benzotriazoles ou les amines stériquement encombrées (habituellement connues sous le terme de HALS).

Les compositions de l'invention peuvent être des formulations rigides, c'est-à-dire sans plastifiant, ou semi-rigides, c'est-à-dire avec des teneurs en plastifiant réduites, telles que pour les applications dans le bâtiment la fabrication de profilés divers ou cablerie électrique, ou pour les compositions ne contenant que des additifs alimentaires, pour la fabrication de bouteilles.

Ces formulations contiennent le plus souvent un renforçateur de chocs, tel qu'un copolymère méthacrylate/butadiène/styrène par exemple.

Elles peuvent également être des formulations plastifiées telles que pour la fabrication de films à usage agricole.

Les plastifiants utilisés sont des composés connus tels que par exemple des phtalates d'alkyle. Le plus souvent utilisé est le phtalate de di(éthyl-2 hexyle) (habituellement appelé phtalate de dioctyle).

Lorsque les compositions contiennent un plastifiant, la teneur de celui-ci est généralement de 5 % à 120 % en poids par rapport au poids de polymère chloré.

La présence de carbonate basique d'aluminium et de magnésium dans les compositions de l'invention apportent un certain nombre d'avantages.

Ainsi dans les compositions contenant des composés du plomb, le carbonate basique d'aluminium et de magnésium de formule (I) permet de réduire la quantité du composé du plomb et éventuellement du cadmium lorsqu'il est présent, sans diminuer la stabilité thermique du polymère, ce qui est un élément positif, car on remplace partiellement des composés qui présentent une certaine toxicité par un composé potentiellement alimentaire.

Dans les compositions contenant des composés organo-stanniques la présence de carbonate basique d'aluminium et de magnésium de formule (I) permet de diminuer le cas échéant la quantité de composé époxydé, qui est généralement un composé liquide. Le remplacement partiel d'un composé liquide permet d'améliorer la rigidité et le degré VICAT (indice de résistance aux chocs) des objets conformés préparés à partir des compositions rigides.

De manière habituelle, l'incorporation des différents stabilisants ou adjuvants est faite sur le polymère chloré à l'état de poudre.

On peut bien entendu préparer un mélange de 2 ou plusieurs des composés constitutifs des compositions selon l'invention avant leur incorporation dans le polymère chloré.

Toutes les méthodes usuelles d'incorporation des différents stabilisants ou adjuvants dans le polymère peuvent être utilisées. Par exemple l'homogénéisation de la composition polymérique peut être réalisée sur malaxeur ou mélangeur à rouleaux, à une température telle que la composition devienne fluide, normalement entre 150°C et 200°C pour le PVC et pendant une durée suffisante, de l'ordre de quelques minutes à quelques dizaines de minutes.

Les compositions de polymère chloré, et plus particulièrement de PVC, peuvent être mises en oeuvre selon toutes les techniques utilisées habituellement comme par exemple l'extrusion, l'injection, l'extrusion-soufflage, le calandrage ou le moulage par rotation.

Les exemples qui suivent illustrent l'invention.

<u>Exemple 1</u>

Préparation d'un carbonate basique d'aluminium et de magnésium.

Dans un bécher de 5000 $cm^3$, on introduit sous agitation à 200 tours/minute un gel aqueux contenant 608 g d'hydroxyde de magnésium.

On rajoute ensuite en 5 min un gel aqueux contenant 2 915 g d'hydroxycarbonate d'aluminium. On maintient le mélange sous agitation pendant 30 min environ à température ambiante.

On sèche à l'étuve pendant 2 heures à 70°C.

On obtient une poudre blanche de formule générale (I) avec :

- $x = 0,37$
- $y = 0,84$
- $z = 6,54$

La granulométrie moyenne des particules de ce composé est de 3 micromètres.

Un échantillon est examiné par diffraction X. Le spectre de diffraction présente une phase cristallisée et relativement intense correspondant à l'hydroxyde de magnésium. On n'observe aucun pic de diffraction correspondant à l'hydroxyde et/ou au carbonate d'aluminium : composés à caractère amorphe.

Example 2

Préparation d'un carbonate basique d'aluminium et de magnésium.

Dans un réacteur de 5 litres muni d'un agitateur, on charge 1080 g d'un gel aqueux de carbonate de magnésium (ayant une concentration exprimée en hydroxyde de magnésium de 6 % en poids par poids).

On agite lentement et on ajoute 2520 d'un gel aqueux d'hydroxyde d'aluminium (ayant une concentration exprimée en $Al_2O_3$ de 9 % en poids par poids).

On agite à grande vitesse pendant 10 min.

On sèche par atomisation (température de sortie : 100°C).

Le carbonate basique d'aluminium et de magnésium de formule (I) présente les caractéristiques suivantes :

- x = 0,65 (rapport molaire $CO_2/Al_2O_3$)
- y = 0,47 (rapport molaire $MgO/Al_2O_3$)
- z = 5,18 (rapport molaire $H_2O/Al_2O_3$)

Un échantillon est examiné par diffraction X. Le spectre de diffraction présente une phase peu intense correspondant à $MgCO_3$, $3H_2O$. On n'observe aucun pic de diffraction correspondant à l'hydroxyde et/ou au carbonate d'aluminium : composés à caractère amorphe.

Exemples 3 et 4

On prépare 3 formulations par homogénéisation à température ambiante, dans un mélangeur rapide, des différents constituants suivants :

| | |
|---|---|
| - PVC préparé par polymérisation en suspension, présentant un K-Wert de 60 | 100 g |
| - renforçateur de choc (copolymère méthacrylate/ butadiène/styrène) | 7 g |
| - $TiO_2$ | 4 g |
| - Ca $CO_3$ | 4 g |
| - lubrifiants CIRE E et CIRE OP (cires esters d'alkyle à longue chaîne d'acides gras) | 1 g |
| - Stéarate de Pb | voir tableau 1 |
| - Phosphite de Pb | voir tableau 1 |
| - Carbonate basique d'Al et de Mg de formule (I) préparé dans l'exemple 1 et ayant une granulométrie moyenne de 3 µm | voir tableau 1 |

Le temps nécessaire à une bonne homogénéisation est de 10 minutes environ.

Les mélanges homogènes ainsi obtenus sont introduits dans un plastographe (de marque BRABENDER) constitué par une cuve chauffée, dans laquelle tournent des pales en contre-rotation, afin de malaxer le polymère et les additifs.

La cuve contient 32 g de composition ; la température est maintenue à 180°C et la vitesse de rotation des pales est de 60 tours/min.

Des prélèvements sont effectués après 5 min, 10 min et 15 min de malaxage dans ces conditions et la coloration des échantillons prélevés est mesurée au moyen d'un colorimètre Minolta et est exprimée en indice de jaune, selon la norme ASTM D 1925 - 70 (plus la valeur de cet indice est élevée, plus l'échantillon est coloré).

Les indices de jaune ainsi mesurés pour chacune des formulations ainsi que les durées en minutes pour lesquelles ces formulations sont devenues noires pendant le traitement à 180°C (stabilité long-time) sont rassemblés dans le tableau 1 ci-après.

| ESSAIS | Stéarate de Pb | Phosphite de Pb | Carbonate basique d'Al et de Mg | INDICE DE JAUNE | | | Noir à |
|---|---|---|---|---|---|---|---|
| | | | | Pour 5 min | pour 10 min | pour 15 min | |
| Témoin 1 | 2 g | 2 g | 0 g | 6,12 | 9,44 | 11,56 | 70 min |
| Exemple 3 | 2 g | 1,5 g | 0,5 g | 6,12 | 8,73 | 10,6 | 70 min |
| Exemple 4 | 1,5 g | 2 g | 0,5 g | 5,2 | 8,32 | 10,7 | 75 min |

TABLEAU 1

La présence de carbonate basique d'aluminium et de magnésium de formule (I) permet de diminuer la quantité de composé de plomb, tout en ralentissant l'évolution de la coloration et en maintenant ou en augmentant la stabilité long-terme de la composition.

Exemple 5

On prépare 2 formulations comportant les constituants suivants et en suivant le mode opératoire décrit dans les exemples 3 et 4 :

| | |
|---|---|
| - PVC préparé en suspension de K-Wert = 60 | 100 g |
| - renforçateur de choc | 7 g |
| - $TiO_2$ | 4 g |
| - Ca $CO_3$ | 4 g |
| - lubrifiants CIRE E et CIRE OP | 1 g |
| - Stéarate de calcium | 0,4 g |
| - Laurate de cadmium/Laurate de baryum (rapport pondéral 2/1) | voir tableau 2 |
| - Phosphite de Pb | voir tableau 2 |
| - Carbonate basique d'Al et de Mg de formule (I) préparé dans l'exemple 1 | voir tableau 2 |

On opère comme dans les exemples 3 et 4.

Les indices de jaune mesurés pour chacune des formulations sont rassemblés dans le tableau 2 ci-après.

| ESSAIS | Stabilisant Cd/Ba | Phosphite de Pb | Carbonate basique d'Al et de Mg | INDICE DE JAUNE | | |
|---|---|---|---|---|---|---|
| | | | | Pour 5 min | pour 10 min | pour 15 min |
| Témoin 2 | 2,5 g | 1,5 g | 0 g | 6,2 | 8,6 | 12,23 |
| Exemple 5 | 2 g | 1,5 g | 0,5 g | 4,87 | 7,94 | 11,25 |

TABLEAU 2

## Revendications

**Revendications pour les Etats contractants suivants : AT, BE, CH, LI, DE, DK, FR, GB, GR, IT, LU, NL, PT, SE**

1. Compositions stabilisées à base de polymère chloré, caractérisées en ce qu'elles contiennent :

   a) 0,005 à 5% en poids par rapport au poids du polymère chloré, d'au moins un composé du plomb ou 0,005 à 5% en poids par rapport au poids du polymère Chloré d'au moins un composé organostannique,
   b) 0,005 à 5% en poids par rapport au poids du polymère chloré, d'au moins un carbonate basique essentiellement amorphe d'aluminium et de magnésium, représenté globalement par la formule (I):

$$(MgO)_y,\ Al_2O_3,\ (CO_2)_x,\ (H_2O)_z \qquad (I)$$

   dans laquelle:

   - y représente en moles un nombre entier ou fractionnaire tel que

$$0 < y \leq 1,7$$

   - x représente en moles un nombre entier ou fractionnaire tel que

$$0<y\leq0,7$$

   - z représente en moles un nombre entier ou fractionnaire supérieur ou égal à 3,

   et dans laquelle au plus 1/4 de l'aluminium est sous forme non amorphe.

2. Compositions selon la revendication 1, caractérisées en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

3. Compositions selon l'une des revendications 1 ou 2, caractérisées en ce qu'elles contiennent de 0,01 à 2% en poids de carbonate basique amorphe d'aluminium et de magnésium de formule (I) par rapport au poids de polymère chloré.

4. Compositions selon l'une des revendications 1 à 3, caractérisées en ce que le composé du plomb est un composé minéral ou organique choisi parmi le carbonate dibasique de plomb, le sulfate tribasique de plomb, le sulfate tétrabasique de plomb, le phosphite dibasique de plomb, l'orthosilicate de plomb, le silicate basique de plomb, le coprécipitat de silicate et de sulfate de plomb, le chlorosilicate basique de plomb, le coprécipitat de gel de silice et d'orthosilicate de plomb, le phtalate dibasique de plomb, le stéarate de plomb, le stéarate dibasique de plomb, le fumarate tétrabasique de plomb, le maléate dibasique de plomb, l'éthyl-2 hexanoate de plomb, le laurate de plomb.

5. Compositions selon l'une des revendications 1 à 4, caractérisées en ce que la quantité de composé du plomb est de 0,05% à 2% en poids par rapport au poids du polymère chloré.

6. Compositions selon l'une des revendications 1 à 5, caractérisées en ce qu'elles comportent des composés organiques du cadmium et du baryum.

7. Compositions selon la revendication 6, caractérisées en ce que les composés organiques du cadmium et du baryum sont des carboxylates ou des phénolates de cadmium et des carboxylates ou des phénolates de baryum.

**8.** Compositions selon l'une des revendications 1 à 7, caractérisées en ce que les composés organiques du cadmium représentent de 0 % à 1 % par rapport au poids du polymère chloré et de préférence de 0,01 % à 0,6 % et les composés du baryum représentent de O % à 5 % en poids et de préférence de 0,02 % à 2 % en poids.

**9.** Compositions selon l'une des revendications 1 à 3, caractérisées en ce que le composé organo-stannique est choisi parmi les carboxylates de dialkylétain et les mercaptides de dialkylétain.

**10.** Compositions selon la revendication 9, caractérisée en ce que le composé organo-stannique est choisi parmi les dérivés de di-n-butylétain ou de di-n-octylétain tels que le dilaurate de dibutylétain, le maléate de dibutylétain, le laurate-malate de dibutylétain, le bis(maléate de mono-$C_4$-$C_8$-alkyle) de dibutylétain, le bis(lauryl-mercaptide) de dibutylétain, le bis-S-S'(mercaptoactate d'isooctyle) dibutylétain, le β-mercapto propionate de dibutylétain, le maléate de di-n-octylétain polymère, le bis.S.S'(mercaptoacétate d'isooctyle) di-n-octylétain, le β-mercapto-propionate de di-n-octylétain

**11.** Compositions selon l'une des revendications 1 à 4, 9 ou 10, caractérisées en ce que le composé organo-stannique représente de 0,01% a 2% en poids par rapport au poids du polymère chloré.

**12.** Compositions selon l'une des revendications 1 à 11, caractérisées en ce qu'elles contiennent une quantité efficace d'une huile polyorganosiloxanique γ-hydroxy-alkylée de formule générale (II)

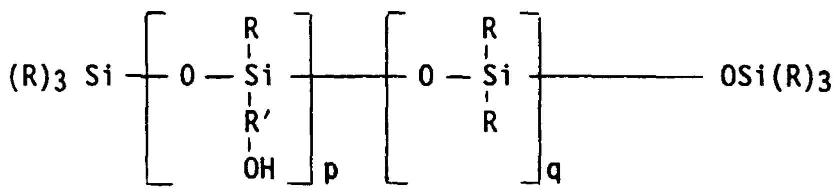

(II)

dans laquelle :

- les radicaux R, identiques ou différents, représentent un radical méthyle ou phényle, 60 % en moles au moins de radicaux R étant des radicaux méthyle,
- R' représente un radical alkylène, linéaire ou ramifié, ayant 2 à 6 atomes de carbone,
- p représente un nombre moyen de 1 à 30,
- q représente un nombre moyen de 1 à 100.

**13.** Compositions selon la revendication 12, caractérisées en ce qu'elles contiennent une huile de formule (II) dans laquelle :

- R représente un radical méthyle ;
- R' représente un radical triméthylène ou méthyl-2 triméthylène ;
- p représente un nombre moyen de 2 à 20 ;
- q représente un nombre moyen de 2 à 30.

**14.** Compositions selon l'une des revendications 1 à 13, caractérisées en ce qu'elles contiennent de 0 % à 5 % en poids d'huile polyorganosiloxanique γ-hydroxyalkylée par rapport au poids du polymère chloré et de préférence de 0,01 % à 2 % en poids.

**Revendications pour l'Etat contractant suivant : ES**

**1.** Procédé de stabilisation de polymère chloré, caractérisé en ce que l'on ajoute audit polymère :

a) 0,005 à 5% en poids par rapport au poids du polymère chloré, d'au moins un composé du plomb ou 0,005 à 5% en poids par rapport au poids du polymère chloré d'au moins un composé organostannique,
b) 0,005 à 5% en poids par rapport au poids du polymère chloré, d'au moins un carbonate basique essentiellement amorphe d'aluminium et de magnésium, représenté globalement par la formule (I):

$$(MgO)_y, Al_2O_3, (CO_2)_x, (H_2O)_z \quad (I)$$

dans laquelle :

- y représente en moles un nombre entier ou fractionnaire tel que

$$0<y\leq 1,7$$

- x représente en moles un nombre entier ou fractionnaire tel que

$$0<y\leq 0,7$$

- z représente en moles un nombre entier ou fractionnaire supérieur ou égal à3,

et dans laquelle au plus 1/4 de l'aluminium est sous forme non amorphe.

2. Procédé selon la revendication 1, caractérisé en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

3. Procédé selon l'une des revendications 1 ou 2, caractérisé en ce que l'on ajoute audit polymère de 0,01% à 2% en poids de carbonate basique amorphe d'aluminium et de magnésium de formule (I) par rapport au poids de polymère chloré.

4. Procédé selon l'une des revendications 1 à 3, caractérisé en ce que le composé du plomb est un composé minéral ou organique choisi parmi le carbonate dibasique de plomb, le sulfate tribasique de plomb, le sulfate tétrabasique de plomb, le phosphite dibasique de plomb, l'orthosilicate de plomb, le silicate basique de plomb, le coprécipitat de silicate et de sulfate de plomb, le chlorosilicate basique de plomb, le coprécipitat de gel de silice et d'orthosilicate de plomb, le phtalate dibasique de plomb, le stéarate de plomb, le stéarate dibasique de plomb, le fumarate tétrabasique de plomb, le maléate dibasique de plomb, l'éthyl-2 hexanoate de plomb, le laurate de plomb.

5. Procédé selon l'une des revendications 1 à 4, caractérisé en ce que la quantité de composé du plomb est de 0,05% à 2% en poids par rapport au poids du polymère chloré.

6. Procédé selon l'une des revendications 1 à 5, caractérisé en ce que l'on ajoute audit polymère des composés organiques du cadmium et du baryum.

7. Procédé selon la revendication 6, caractérisé en ce que les composés organiques du cadmium et du baryum sont des carboxylates ou des phénolates de cadmium et des carboxylates ou des phénolates de baryum.

8. Procédé selon l'une des revendications 1 à 7, caractérisé en ce que les composés organiques du cadmium représentent de 0 % à 1% par rapport au poids du polymère chloré et de préférence de 0,01 % à 0,6 % et les composés du baryum représentent de 0 % à 5 % en poids et de préférence de 0,02 % à à 2 % en poids.

9. Procédé selon l'une des revendications 1 à 3, caractérisé en ce que le composé organo-stannique est choisi parmi les carboxylates de dialkylétain et les mercaptides de dialkylétain.

10. Procédé selon la revendication 9, caractérisé en ce que le composé organe-stannique est choisi parmi les dérivés de di-n-butylétain ou de di-n-octylétain tels que le dilaurate de dlbutylétain, le maléate de dibutylétain, le laurate-maléate de dibutylétain, le bis(maléate de mono-$C_4$-$C_8$-akyle) de dibutylétain, le bis(lauryl-mercaptide) de dibutylétain, le bis-S-S'(mercaptoacétate d'isooctyle) dibutylétain, le β-mercapto propionate de dibutylétain, le maléate de di-n-octylétain polymère, le bis-S-S'(mercaptoacétate d'isooctyle) di-n-octylétain, le β-mercapto-propionate de di-n-octylétain.

**11.** Procédé selon l'une des revendications 1 à 4, 9 ou 10, caractérisé en ce que le composé organo-stannique représente de 0,01 à 2% en poids par rapport au poids du polymère chloré.

**12.** Procédé selon l'une des revendications 1 à 11, caractérisé en ce que l'on ajoute audit polymère une quantité efficace d'une huile polyorganosiloxanique γ-hydroxy-alkylée de formule générale (II) :

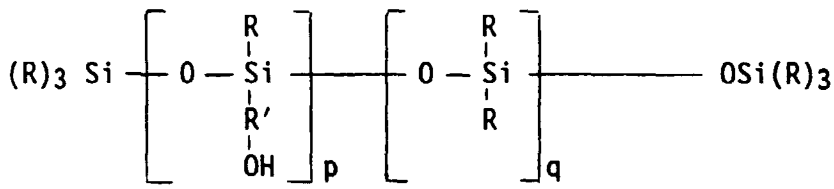

(II)

dans laquelle :

- les radicaux R, identiques ou différents, représentent un radical méthyle ou phényle, 60 % en moles au moins de radicaux R étant des radicaux méthyle,
- R' représente un radical alkylène, linéaire ou ramifié, ayant 2 à 6 atomes de carbone,
- p représente un nombre moyen de 1 à 30,
- q représente un nombre moyen de 1 à 100.

**13.** Procédé selon la revendication 12, caractérisé on ce que l'on ajoute audit polymère une huile de formule (II) dans laquelle :

- R représente un radical méthyle ;
- R' représente un radical triméthylène ou méthyl-2 triméthylène ;
- p représente un nombre moyen de 2 à 20 ;
- q représente un nombre moyen de 2 à 30.

**14.** Procédé selon l'une des revendications 1 à 13, caractérisé en ce que l'on ajoute audit polymère de 0% à 5% en poids d'huile polyorganosiloxanique γ-hydroxyalkylée par rapport au poids du polymère chloré et de préférence de 0,01% à 2% en poids.

**Patentansprüche**

**Patentansprüche für folgende Vertragsstaaten : AT, BE, CH, LI, DE, DK, FR, GB, GR, IT, LU, NL, PT, SE**

**1.** stabilisierte Zusammensetzungen auf Basis eines chlorierten Polymers, dadurch gekennzeichnet, daß sie enthalten:

a) 0,005 bis 5 Gew.-%, bezogen auf das Gewicht des chlorierten Polymers, mindestens einer Bleiverbindung oder 0,005 bis 5 Gew.-%, bezogen auf das Gewicht des chlorierten Polymers, mindestens einer Organozinnverbindung,
b) 0,005 bis 5 Gew.-%, bezogen auf das chlorierte Polymer, mindestens eines im wesentlichen amorphen basischen Aluminium-Magnesium-carbonats der allgemeinen Formel (I):

$$(MgO)_y \cdot Al_2O_3 \cdot (CO_2)_x \cdot (H_2O)_z \qquad (I)$$

in der:

- y in Mol eine ganze oder gebrochene Zahl mit $0 < y \leq 1,7$ darstellt;
- x in Mol eine ganze oder gebrochene Zahl mit $0 < x \leq 0,7$ darstellt;
- z in Mol eine ganze oder gebrochene Zahl größer oder gleich 3 darstellt,

und in der höchstens 1/4 des Aluminiums in nichtamorpher Form vorliegt.

**2.** Zusammensetzungen nach Anspruch 1, dadurch gekennzeichnet, daß das chlorierte Polymer ausgewählt ist aus Polyvinylchlorid und Poyvinylidenchlorid; Copolymeren überwiegend mit vinylchlorid-Einheiten, die ausgehend von Vinylchlorid und weiteren Monomeren erhalten werden; Mischungen aus Polymeren oder Copolymeren, deren Hauptbestandteile ausgehend von Vinylchlorid erhalten werden.

**3.** Zusammensetzungen nach Anspruch 1 oder 2, dadurch gekennzeichnet, daß sie 0,01 bis 2 Gew.-%, bezogen auf das Gewicht des chlorierten Polymers, amorphes basisches Aluminium-Magnesiumcarbonat der Formel (I) enthalten.

**4.** Zusammensetzungen nach einem der Ansprüche 1 bis 3, dadurch gekennzeichnet, daß die Bleiverbindung eine anorganische oder organische Verbindung ist, ausgewählt aus zweibasigem Bleicarbonat, dreibasigem Bleisulfat, vierbasigem Bleisulfat, zweibasigem Bleiphosphit Bleiorthosilikat, Basischem Bleisilikat, dem gemeinsamen Fällungsprodukt von Bleisilikat und -sulfat, basischem Bleichlorosilikat, dem gemeinsamen Fällungsprodukt von Siliciumdioxidgel und Bleiorthosilikat, zweibasigem Bleiphthalat, Bleistearat, zweibasigem Bleistearat, vierbasigem Bleifumarat, zweibasigem Bleimaleat, Blei-2-ethylhexanoat und Bleilaurat.

**5.** Zusammensetzungen nach einem der Ansprüche 1 bis 4, dadurch gekennzeichnet, daß die Menge der Bleiverbindung 0,05 bis 2 Gew,-% beträgt, bezogen auf das Gewicht des chlorierten Polymers.

**6.** Zusammensetzungen nach einem der Ansprüche 1 bis 5, dadurch gekennzeichnet, daß sie organische Cadmium- und Bariumverbindungen enthalten.

**7.** Zusammensetzungen nach Anspruch 6, dadurch gekennzeichnet, daß die organischen Cadmium- und Bariumverbindungen Cadmiumcarboxylate oder -phenolate und Bariumcarboxylate oder -phenolate sind.

**8.** Zusammensetzungen nach einem der Ansprüche 1 bis 7, dadurch gekennzeichnet, daß die organischen Cadmiumverbindungen 0 bis 1 Gew.-%, vorzugsweise 0,01 bis 0,6 %, darstellen und die Bariumverbindungen 0 bis 5 Gew.-%, vorzugsweise 0,02 bis 2 Gew,-%, darstellen, jeweils bezogen auf das Gewicht des chlorierten Polymers.

**9.** Zusammensetzungen nach einem der Ansprüche 1 bis 3, dadurch gekennzeichnet, daß die Organozinnverbindung ausgewählt ist aus Dialkylzinncarboxylaten und Dialkylzinnmercaptiden.

**10.** Zusammensetzungen nach Anspruch 9, dadurch gekennzeichnet, daß die Organozinnverbindung ausgewählt ist aus Derivaten des Di-n-butylzinns oder des Di-n-octylzinns, wie z.B. Dibutylzinndilaurat, Dibutylzinnmaleat, Dibutyl-zinnlaurat-maleat, Dibutylzinn-bis(mono-$C_4$-$C_8$-Alkylmaleat), Dibutylzinn-bis-(lauryl-mercaptid), Dibutylzinn-bis-S,S'-(isooctylmercaptoacetat), Dibutyizinn-β-mercaptopropionat, Polymer des Di-n-octylzinnmaleats, Di-n-octylzinn-bis-S,S'-(isooctylmercaptoacetat),Di-n-octylzinn-β-mercaptopropionat.

**11.** Zusammensetzungen nach einem der Ansprüche 1 bis 4, 9 oder 10, dadurch gekennzeichnet, daß die Organozinnverbindung 0,01 bis 2 Gew.-% darstellt, bezogen auf das chlorierte Polymer.

**12.** Zusammensetzungen nach einem der Ansprüche 1 bis 11, dadurch gekennzeichnet, daß sie eine wirksame Menge eines γ-hydroxyalkylierten Polyorganosiloxanöls der allgemeinen Formel (II)

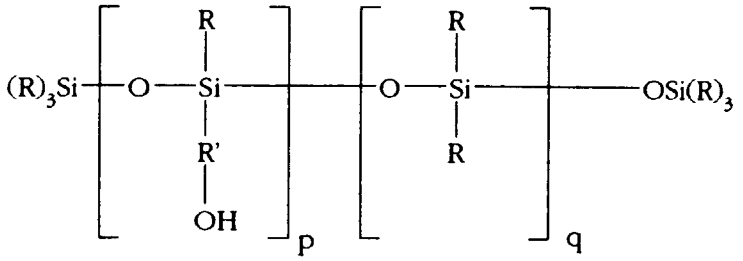

(II)

enthalten, in der:

- die Reste R, identisch oder verschieden, einen Methyl- oder Phenylrest darstellen, wobei mindestens 60 Mol-% der Reste R Methylreste sind,
- R' einen linearen oder verzweigten Alkylenrest mit 2 bis 6 Kohlenstoffatomen darstellt,
- p eine mittlere Zahl von 1 bis 30 darstellt,
- q eine mittlere Zahl von 1 bis 100 darstellt.

**13.** Zusammensetzungen nach Anspruch 12, dadurch gekennzeichnet, daß sie ein Öl der Formel (II) enthalten, in der:

- R einen Methylrest darstellt;
- R' einen Trimethylen- oder 2-Methyltrimethylenrest darstellt;
- p eine mittlere Zahl von 2 bis 20 darstellt;
- q eine mittlere Zahl von 2 bis 30 darstellt.

**14.** Zusammensetzungen nach einem der Ansprüche 1 bis 13, dadurch gekennzeichnet, daß sie 0 bis 5 Gew.-%, vorzugsweise 0,01 bis 2 Gew.-%, des $\gamma$-hydroxyalkylierten Polyorganosiloxanöls enthalten, bezogen auf das Gewicht des chlorierten Polymers.

**Patentansprüche für folgenden Vertragsstaat : ES**

**1.** Verfahren zur Stabilisierung eines chlorierten Polymers, dadurch gekennzeichnet, daß man zu diesem Polymer hinzugibt:

a) 0,005 bis 5 Gew.-%, bezogen auf das Gewicht des chlorierten Polymers, mindestens einer Bleiverbindung oder 0,005 bis 5 Gew.-%, bezogen auf das Gewicht des chlorierten Polymers, mindestens einer Organozinnverbindung,
b) 0,005 bis 5 Gew.-%, bezogen auf das chlorierte Polymer, mindestens eines im wesentlichen amorphen basischen Aluminium-Magnesium-carbonats der allgemeinen Formel (I):

$$(MgO)_y \cdot Al_2O_3 \cdot (CO_2)_x \cdot (H_2O)_z \quad (I)$$

in der:

- y in Mol eine ganze oder gebrochene Zahl mit $0 < y \leq 1{,}7$ darstellt;
- x in Mol eine ganze oder gebrochene Zahl mit $0 < x \leq 0{,}7$ darstellt;
- z in Mol eine ganze oder gebrochene Zahl größer oder gleich 3 darstellt,

und in der höchstens 1/4 des Aluminiums in nichtamorpher Form vorliegt.

**2.** Verfahren nach Anspruch 1, dadurch gekennzeichnet, daß das chlorierte Polymer ausgewählt ist aus Polyvinylchlorid und Poyvinylidenchlorid; Copolymeren überwiegend mit Vinylchlorid-Einheiten, die ausgehend von Vinylchlorid und weiteren Monomeren erhalten werden; Mischungen aus Polymeren oder Copolymeren, deren Hauptbestandteile ausgehend von Vinylchlorid erhalten werden.

**3.** Verfahren nach Anspruch 1 oder 2, dadurch gekennzeichnet, daß man zu dem Polymer 0,01 bis 2 Gew.-%, bezogen auf das Gewicht des chlorierten Polymers, amorphes basisches Aluminium-Magnesiumcarbonat der Formel (I) hinzugibt.

**4.** Verfahren nach einem der Ansprüche 1 bis 3, dadurch gekennzeichnet, daß die Bleiverbindung eine anorganische oder organische Verbindung ist, ausgewählt aus zweibasigem Bleicarbonat, dreibasigem Bleisulfat, vierbasigem Bleisulfat, zweibasigem Bleiphosphit, Bleiorthosilikat, basischem Bleisilikat, dem gemeinsamen Fällungsprodukt von Bleisilikat und -sulfat, basischem Bleichlorosilikat, dem gemeinsamen Fällungsprodukt von Siliciumdioxidgel und Bleiorthosilikat, zweibasigem Bleiphthalat, Bleistearat, sweibasigem Bleistearat, vierbasigem Bleifumarat, zweibasigem Bleimaleat, Blei-2-ethyl-hexanoat und Bleilaurat.

**5.** Verfahren nach einem der Ansprüche 1 bis 4, dadurch gekennzeichnet, daß die Menge der Bleiverbindung 0,05

bis 2 Gew.-% beträgt, bezogen auf das Gewicht des chlorierten Polymers.

**6.** Verfahren nach einem der Ansprüche 1 bis 5, dadurch gekennzeichnet, daß man zu dem Polymer organische Cadmium- und Bariumverbindungen hinzugibt.

**7.** Verfahren nach Anspruch 6, dadurch gekennzeichnet, daß die organischen Cadmium- und Bariumverbindungen Cadmiumcarboxylate oder -phenolate und Bariumcarboxylate oder -phenolate sind.

**8.** Verfahren nach einem der Ansprüche 1 bis 7, dadurch gekennzeichnet, daß die organischen Cadmiumverbindungen 0 bis 1 Gew.-%, vorzugsweise 0,01 bis 0,6 %, darstellen und die Bariumverbindungen 0 bis 5 Gew,.-%, vorzugsweise 0,02 bis 2 Gew.-%, darstellen, jeweils bezogen auf das Gewicht des chlorierten Polymers.

**9.** Verfahren nach einem der Ansprüche 1 bis 3, dadurch gekennzeichnet, daß die Organozinnverbindung ausgewählt ist aus Dialkylzinncarboxylaten und Dialkylzinnmercaptiden.

**10.** Verfahren nach Anspruch 9, dadurch gekennzeichnet, daß die Organozinnverbindung ausgewählt ist aus Derivaten des Di-n-butylzinns oder des Di-n-octylzinns, wie z.B. Dibutylzinnlaurat, Dibutylzinnmaleat, Dibutylzinnlauratmaleat, Dibutylzinn-bis(mono-$C_4$-$C_8$-Alkylmaleat), Dibutylzinn-bis-(lauryl-mercaptid), Dibutylzinn-bis-S,S (isooctylmercaptoacetat), Dibutylzinn-β-mercaptopropionat, Polymer des Di-n-octylzinnmaleats, Di-n-octylzinn-bis-S,S'-(isooctylmercaptoacetat), Di-n-octylzinn-β-mercaptopropionat.

**11.** Verfahren nach einem der Ansprüche 1 bis 4, 9 oder 10, dadurch gekennzeichnet, daß die Organozinnverbindung 0,01 bis 2 Gew.-% darstellt, bezogen auf das chlorierte Polymer.

**12.** Verfahren nach einem der Ansprüche 1 bis 11, dadurch gekennzeichnet, daß man zu dem Polymer eine wirksame Menge eines γ-hydroxyalkylierten Polyorganosiloxanöls der allgemeinen Formel (II)

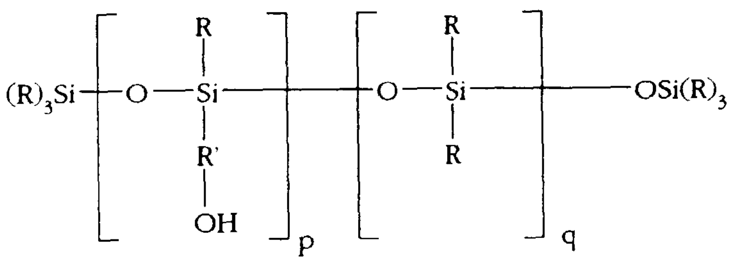

(II)

hinzugibt, in der:

- die Reste R, identisch oder verschieden, einen Methyl- oder Phenylrest darstellen, wobei mindestens 60 Mol-% der Reste R Methylreste sind,
- R' einen linearen oder verzweigten Alkylenrest mit 2 bis 6 Kohlenstoffatomen darstellt,
- p eine mittlere Zahl von 1 bis 30 darstellt,
- q eine mittlere Zahl von 1 bis 100 darstellt.

**13.** Verfahren nach Anspruch 12, dadurch gekennzeichnet, daß man zu dem Polymer ein Öl der Formel (II) hinzugibt, in der:

- R einen Methylrest darstellt;
- R' einen Trimethylen- oder 2-Methyltrimethylenrest darstellt;
- p eine mittlere Zahl von 2 bis 20 darstellt;
- q eine mittlere Zahl von 2 bis 30 darstellt.

**14.** Verfahren nach einem der Ansprüche 1 bis 13, dadurch gekennzeichnet, daß man zu dem Polymer 0 bis 5 Gew.-%, vorzugsweise 0,01 bis 2 Gew.-%, des γ-hydroxyalkylierten Polyorganosiloxanöls hinzugibt, bezogen auf das Gewicht des chlorierten Polymers.

## Claims

**Claims for the following Contracting States : AT, BE, CH, LI, DE, DK, FR, GB, GR, IT, LU, NL, PT, SE**

**1.** Stabilised chlorinated polymer-based compositions, characterized in that they contain:

a) 0.005% to 5% by weight with respect to the chlorinated polymer of at least one lead compound or 0.005% to 5% by weight with respect to the chlorinated polymer of at least one organostannic compound;
b) 0.005% to 5% by weight with respect to the chlorinated polymer of at least one essentially amorphous basic carbonate of aluminium and magnesium with global formula (I):

$$(MgO)_y, Al_2O_3, (CO_2)_x, (H_2O)_z \quad (I)$$

where:

- y, in moles, is a whole or fractional number such that $0 < y \leq 1.7$;
- x, in moles, is a whole or fractional number such that $0 < y \leq 0.7$;
- z, in moles, is a whole or fractional number which is greater than or equal to 3;

and in which at most 1/4 of the aluminium is a non-amorphous form.

**2.** Compositions according to claim 1, characterized in that the chlorinated polymer is selected from polyvinyl chloride and polyvinylidene chloride; copolymers containing mainly vinyl chloride units obtained from vinyl chloride and other monomers; and mixtures of polymers or copolymers of which a major portion is obtained from vinyl chloride.

**3.** Compositions according to claim 1 or claim 2, characterized in that they contain 0.01% to 2% by weight of amorphous basic aluminium and magnesium carbonate with formula (I), with respect to the weight of chlorinated polymer.

**4.** Compositions according to any one of claims 1 to 3, characterized in that the lead compound is an inorganic or organic compound selected from dibasic lead carbonate, tribasic lead sulphate, tetrabasic lead sulphate, dibasic lead phosphite, lead orthosilicate, basic lead silicate, a co-precipitate of lead silicate and sulphate, basic lead chlorosilicate, a co-precipitate of silica gel and lead orthosilicate, dibasic lead phthalate, lead stearate, dibasic lead stearate, tetrabasic lead fumarate, dibasic lead maleate, lead 2-ethyl hexanoate, and lead laurate.

**5.** Compositions according to any one of claims 1 to 4, characterized in that the quantity of lead compound is 0.05% to 2% by weight with respect to the weight of chlorinated polymer.

**6.** Compositions according to any one of claims 1 to 5, characterized in that they contain organic compounds of cadmium and barium.

**7.** Compositions according to claim 6, characterized in that the organic compounds of cadmium and barium are cadmium carboxylates or phenolates and barium carboxylates or phenolates.

**8.** Compositions according to any one of claims 1 to 7, characterized in that the organic cadmium compounds represent 0 to 1% with respect to the weight of chlorinated polymer, preferably 0.01% to 0.6%, and the barium compounds represent 0 to 5% by weight , preferably 0.02% to 2% by weight.

**9.** Compositions according to any one of claims 1 to 3, characterized in that the organostannic compound is selected from dialkyltin carboxylates and dialkyltin mercaptides.

**10.** Compositions according to claim 9, characterized in that the organostannic compound is selected from derivatives of di-n-butyltin or di-n-octyltin such as dibutyltin dilaurate, dibutyltin maleate, dibutyltin laurate-maleate, dibutyltin bis(mono-($C_4$-$C_8$)-alkyl maleate), dibutyltin bis(lauryl mercaptide), dibutyltin bis-S-S'-(isooctyl mercaptoacetate), dibutyltin β-mercapto propionate, polymeric di-n-octyltin maleate, di-n-octyltin bis-S-S'(isooctyl mercaptoacetate),

and di-n-octyltin β-mercaptopropionate.

**11.** Compositions according to any one of claims 1 to 4, 9 or 10, characterized in that the organostannic compound represents 0.01% to 2% by weight with respect to the weight of chlorinated polymer.

**12.** Compositions according to any one of claims 1 to 11, characterized in that they contain an effective quantity of a γ-hydroxy-alkylated polyorganosiloxane oil with general formula (II):

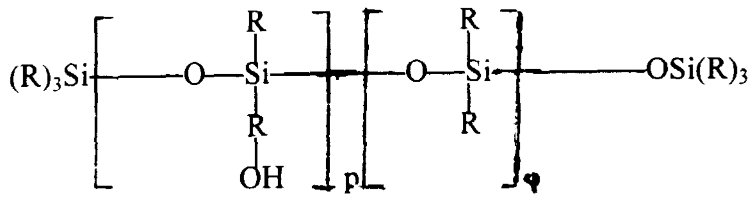 (II)

where:

- radicals R, which may be identical or different, are a methyl or phenyl radical, at least 60 mole % of radicals R being methyl radicals;
- R' is a linear or branched alkylene radical containing 2 to 6 carbon atoms;
- p is an average number of 1 to 30;
- q is an average number of 1 to 100.

**13.** Compositions according to claim 12, characterized in that they contain an oil with formula (II) in which:

- R is a methyl radical;
- R' is a trimethylene or 2-methyl trimethylene radical;
- p is an average number of 2 to 20;
- q is an average number of 2 to 30.

**14.** Compositions according to any one of claims 1 to 13, characterized in that they contain 0 to 5% by weight of γ-hydroxyalkylated polyorganosiloxane oil with respect to the weight of chlorinated polymer, preferably 0.01% to 2% by weight.

**Claims for the following Contracting State : ES**

**1.** A process for stabilising a chlorinated polymer, characterized in that the following is added to said polymer:

a) 0.005% to 5% by weight with respect to the chlorinated polymer of at least one lead compound or 0.005% to 5% by weight with respect to the chlorinated polymer of at least one organostannic compound;
b) 0.005% to 5% by weight with respect to the chlorinated polymer of at least one essentially amorphous basic carbonate of aluminium and magnesium with global formula (I):

$$(MgO)_y, Al_2O_3, (CO_2)_x, (H_2O)_z \qquad (I)$$

where:

- y, in moles, is a whole or fractional number such that $0 < y \leq 1.7$;
- x, in moles, is a whole or fractional number such that $0 < y \leq 0.7$;
- z, in moles, is a whole or fractional number which is greater than or equal to 3;

and in which at most 1/4 of the aluminium is a non-amorphous form.

**2.** A process according to claim 1, characterized in that the chlorinated polymer is selected from polyvinyl chloride

and polyvinylidene chloride; copolymers containing mainly vinyl chloride units obtained from vinyl chloride and other monomers; and mixtures of polymers or copolymers of which a major portion is obtained from vinyl chloride.

**3.** A process according to claim 1 or claim 2, characterized in that 0.01% to 2% by weight of amorphous basic aluminium and magnesium carbonate with formula (I) is added, with respect to the weight of chlorinated polymer.

**4.** A process according to any one of claims 1 to 3, characterized in that the lead compound is an inorganic or organic compound selected from dibasic lead carbonate, tribasic lead sulphate, tetrabasic lead sulphate, dibasic lead phosphite, lead orthosilicate, basic lead silicate, a co-precipitate of lead silicate and sulphate, basic lead chlorosilicate, a co-precipitate of silica gel and lead orthosilicate, dibasic lead phthalate, lead stearate, dibasic lead stearate, tetrabasic lead fumarate, dibasic lead maleate, lead 2-ethyl hexanoate, and lead laurate.

**5.** A process according to any one of claims 1 to 4, characterized in that the quantity of lead compound is 0.05% to 2% by weight with respect to the weight of chlorinated polymer.

**6.** A process according to any one of claims 1 to 5, characterized in that organic compounds of cadmium and barium are added to said polymer.

**7.** A process according to claim 6, characterized in that the organic compounds of cadmium and barium are cadmium carboxylates or phenolates and barium carboxylates or phenolates.

**8.** A process according to any one of claims 1 to 7, characterized in that the organic cadmium compounds represent 0 to 1% with respect to the weight of chlorinated polymer, preferably 0.01% to 0.6%, and the barium compounds represent 0 to 5% by weight , preferably 0.02% to 2% by weight.

**9.** A process according to any one of claims 1 to 3, characterized in that the organostannic compound is selected from dialkyltin carboxylates and dialkyltin mercaptides.

**10.** A process according to claim 9, characterized in that the organostannic compound is selected from derivatives of di-n-butyltin or di-n-octyltin such as dibutyltin dilaurate, dibutyltin maleate, dibutyltin laurate-maleate, dibutyltin bis (mono-($C_4$-$C_8$)-alkyl maleate), dibutyltin bis(lauryl mercaptide), dibutyltin bis-S-S'-(isooctyl mercaptoacetate), dibutyltin β-mercapto propionate, polymeric di-n-octyltin maleate, di-n-octyltin bis-S-S'(isooctyl mercaptoacetate), and di-n-octyltin β-mercaptopropionate.

**11.** A process according to any one of claims 1 to 4, 9 or 10, characterized in that the organostannic compound represents 0.01% to 2% by weight with respect to the weight of chlorinated polymer.

**12.** A process according to any one of claims 1 to 11, characterized in that an effective quantity of a γ-hydroxy-alkylated polyorganosiloxane oil with general formula (II):

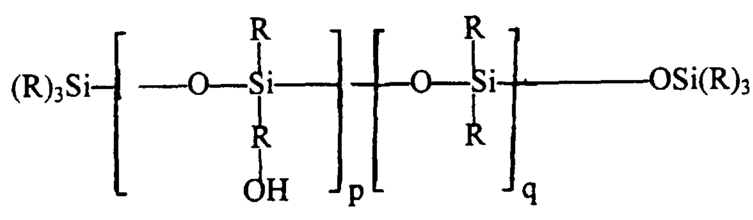 (II)

is added, where:

- radicals R, which may be identical or different, are a methyl or phenyl radical, at least 60 mole % of radicals R being methyl radicals;
- R' is a linear or branched alkylene radical containing 2 to 6 carbon atoms;
- p is an average number of 1 to 30;
- q is an average number of 1 to 100.

**13.** A process according to claim 12, characterized in that an oil with formula (II) is added to said polymer, in which oil:

- R is a methyl radical;
- R' is a trimethylene or 2-methyl trimethylene radical;
- p is an average number of 2 to 20;
- q is an average number of 2 to 30.

**14.** A process according to any one of claims 1 to 13, characterized in that 0 to 5% by weight of γ-hydroxyalkylated polyorganosiloxane oil is added with respect to the weight of chlorinated polymer, preferably 0.01% to 2% by weight.